# EUROPEAN PATENT APPLICATION

(11) **EP 4 811 832 A1**
(43) Date of publication of application: **23.09.2026**
(21) Application number: 25164979.4
(22) Date of filing: 20.03.2025
(51) Int. Cl.: H04W 4/70, H04W 8/26

(54) **INTERNET OF THINGS DEVICE AND READER**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to an Internet of Things, loT, device comprising: a circuitry, which in operation, assigns an identifier provided by a reader, wherein the identifier provided by the reader is comprised in a first message; and a transceiver, which in operation, transmits, in response to assigning the identifier provided by the reader, a second message to the reader.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT communication procedure.

In an embodiment, the techniques disclosed here feature an Internet of Things (IoT), device comprising the following. A circuitry of the loT device assigns an identifier provided by a reader, wherein the identifier provided by the reader is comprised in a first message. A transceiver of the loT device transmits, in response to assigning the identifier provided by the reader, a second message to the reader.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows an overview of an A-loT system;
- **Fig. 3**: illustrates a first topology of an loT communication between a base station and an loT device,
- **Fig. 4**: illustrates a second topology of an loT communication between a base station and an loT device, with an intermediate node,
- **Fig. 5**: shows a signaling diagram of a general Access Stratum procedure;
- **Fig. 6**: illustrates details of the signaling diagram of Fig. 5;
- **Fig. 7**: illustrates a signaling diagram of a handshake mechanism for a reader provided identifier according to the present disclosure;
- **Fig. 8**: illustrates possible failure cases of the handshake mechanism shown in the signaling diagram of Fig. 7;
- **Figs. 9 to 12**: illustrates modifications of the signaling diagram shown in Fig. 7;
- **Fig. 13**: illustrates a general, simplified and exemplary block diagram of an loT device and a node;
- **Fig. 14**: illustrates functional structure of the circuitries pertaining to the loT device and the node;
- **Fig. 15**: illustrates a flow diagram for the loT device according to an exemplary embodiment of the present disclosure;
- **Fig. 16**: illustrates a flow diagram for the node according to an exemplary embodiment of the present disclosure;
- **Fig. 17**: is a signaling diagram illustrating an exemplary exchange between an loT device and a node according to an exemplary embodiment of the present disclosure; and
- **Fig. 18**: shows exemplary functional split options in 5G O-RAN.

### DETAILED DESCRIPTION

### 5G NR system architecture and protocol stacks

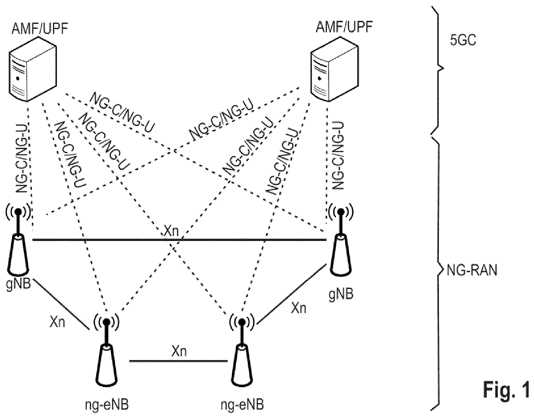

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.1.0, section 4).

### Ambient IoT Devices

An ambient Internet of Things device (A-loT device) is a new type of device, introduced to be supported by 5G NR or possible later generation (e.g. 6G) technology. A-loT devices can be understood as loT devices that have the ability to harvest energy from natural or ambient sources, such as vibration, light, heat or a carrier wave (CW), e.g. provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or without a battery and further may not require battery replacement. Another term is "zero energy device", due to their capability to operate without a dedicated battery source. An A-loT device may be an ultra-low-complexity device with ultra-low power consumption for very-low end loT applications. Examples for A-IoT devices include - without any limitation - wearables, smart home devices, automotive devices, sensors, smart keys, healthcare devices, warehousing, electronic shelf label, etc.

A-loT devices may lack RRC states. For example, the A-IoT protocol stack may support only MAC layer and a physical (PHY) layer, which can provide service to the upper layer (for e.g A-loT application layer) to send/receive data over the A-loT air interface, i.e. the interface between the reader and the device. Such new specifically designed operation states may have to be defined and configured for A-IoT devices. For example, ON, OFF, and RETENTION/SLEEP states may be introduced in terms of discontinuous transmission or energy saving criteria of low power devices. ARQ (Automatic Repeat Request) and Hybrid ARQ transmission protocols that are used in legacy NR to ensure reliable data delivery may not be supported by A-IoT devices. A-loT devices have limited power available, resulting in reduced time periods of communication capability. Further, full device registration with the network might be difficult for IoT devices, although a simplified registration or identification might be necessary.

A-loT devices may not support mobility (e.g. no cell selection/re-selection/handover functions, as in legacy NR).

The above characteristics of an A-loT device facilitates the wide deployment of the devices for various applications. The integration of A-loT devices into 5G and future technologies poses a demanding problem that is addressed in the present disclosure.

Importantly, it is noted that the present disclosure is not limited to A-loT devices, but may also be applicable to any other loT devices (e.g. other types, such as Critical loT, Massive loT, Broadband IoT, Narrow-Band IoT etc.) or even more generally to other devices that benefit from the improvements of the present disclosure. For example, the terms loT device and A-loT device are used interchangeably in this disclosure; alternatively, the terms low-power-consumption device or low-complexity transceiver device could be used instead as well.

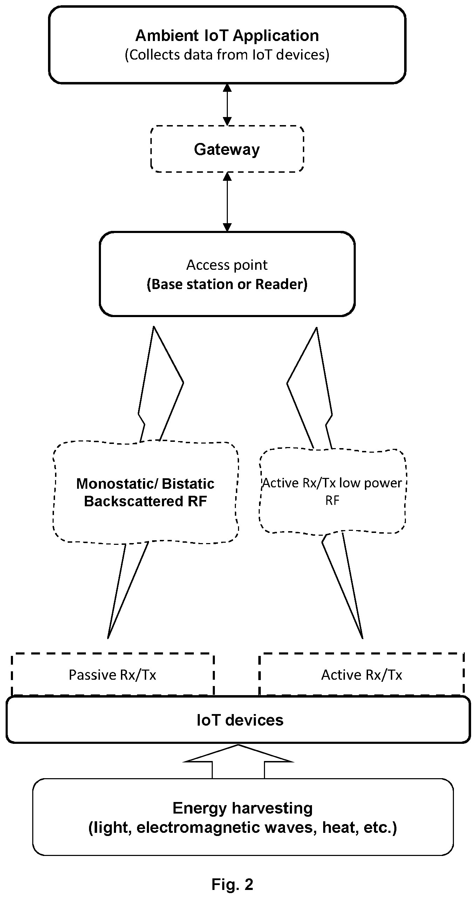

**Fig. 2** is an overview of an A-loT system, including the Ambient loT devices, an access point, an optional gateway and including the A-loT applications. As apparent from Fig. 2 the A-loT devices may harvest energy from their environment, i.e. their ambient. The A-loT devices may be able to communicate using passive reception and transmission (e.g. passive Rx/Tx) by monostatic or bistatic backscattering or alternatively may have an active Rx/Tx (low power) RF. The A-loT devices may communicate via an access points (e.g. a base station or reader) with A-loT applications that may collect data from the A-loT devices. A gateway may be optionally between the access point and the A-loT applications.

More details on use cases, device constraints and performance requirements as well as KPIs (Key Performance Indicators) can be obtained from the document 3GPP TR 22.840 v19.0.0.

### Topologies

Particularly, two different topologies are exemplarily considered in this disclosure. More details on topologies can be obtained from the document 3GPP TR 22.848 v19.0.0 and TR 22.840 v19.0.0.

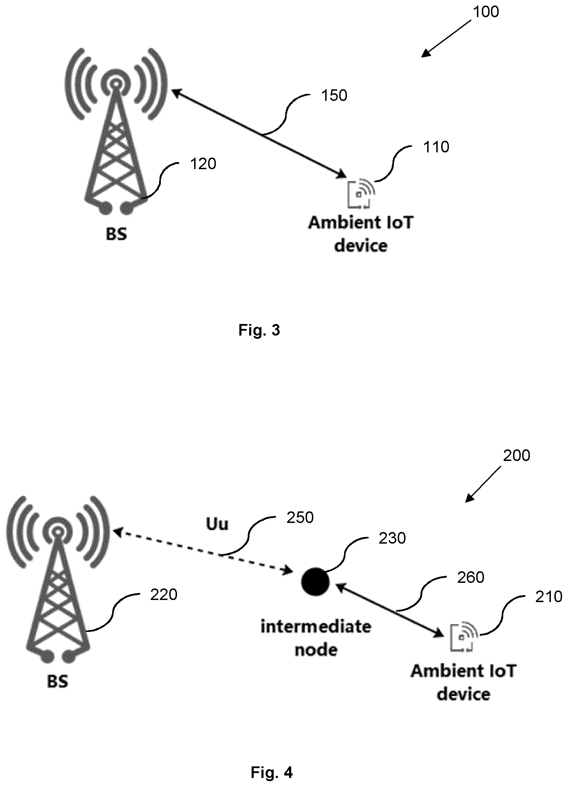

In a first topology 100 as illustrated in **Fig. 3****,** an A-loT device 110 directly and bidirectionally communicates with a base station 120 over a wireless channel 150. In general, the A-IoT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

In a second topology as illustrated in **Fig. 4****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 4****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

For any topology in general, the reader is an equipment that directly communicates with the A-loT device, for e.g in topology 1 the reader is a base station and for topology 2 the reader is an intermediate node (e.g. UE).

Communication channels between A-loT reader and A-loT device are herein referred to as reader to device (R2D) for data transmissions from reader to device, and device to reader (D2R) for data transmissions from device to reader.

### IoT Communication

Communication by IoT devices covers both active transmission as well as passive backscattering (see Fig. 2). In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering
Energy-efficient communication is one key aspect for Ambient loT devices. In said respect, an On-Off-Keying (OOK) line coding scheme can be used as a modulation technique for loT communication in 3GPP 5G and future (e.g. 6G) communication systems, due to its simplicity and energy efficiency.

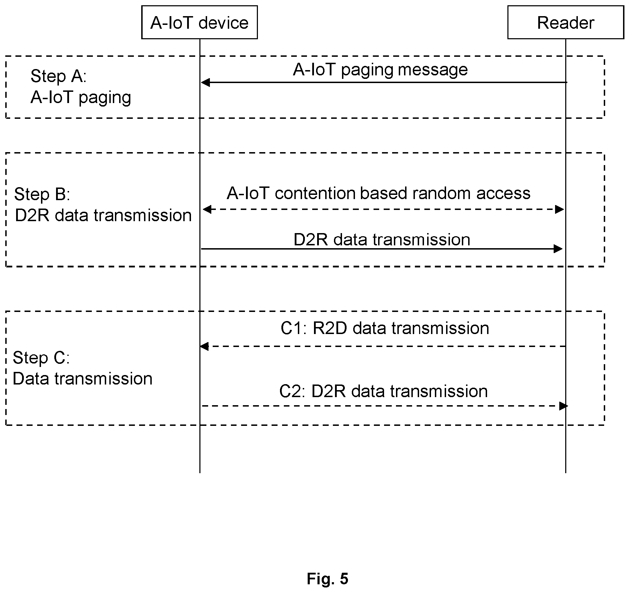

Ambient loT devices may support different types of services, such as "inventory" and "command". For either of the service request types, a baseline communication procedure may be exemplarily assumed which is shown **Fig. 5****.** As shown in the signaling diagram in Fig. 5, in a first step (step A) an initial access trigger is sent to the device, followed by an optional random-access-like procedure (step B), and a data communication procedure between reader and device e.g. D2R data transmission in (step B). Additionally, the data communication procedure may comprise an R2D data transmission (C1 in step C) and/or D2R data transmission (C2 in step C).

In other words, the reader may transmit a message such as an Initial Trigger Message, which is also referred to as paging message, indicating one or multiple loT devices that should respond. For example, based on a service request, the reader sends the loT paging message in step A, indicating device(s) that should respond.

In step B, triggered loT device(s) perform the device ID transmission via the loT contention-based random access (CBRA) procedure (dashed line in Step B in Fig. 5) or the IoT contention-free random access (CFRA) procedure, e.g. by D2R data transmission (solid line in Step B in Fig. 5). In other words, in response to step A, the triggered loT devices may perform a random-access-like procedure and/or data communication.

Triggered loT device(s) can receive in step C1 a possible R2D data transmission (e.g. for sending the command to the loT device). Additionally or alternatively, in step C2, D2R data transmission (e.g. the corresponding response to command) is possible.

In particular, the following description will focus on two types of procedures "inventory only" and "inventory and command". The procedure with steps A and B can be used to support the inventory only procedure. The procedure with steps A, B, C1 and C2 can be used to support the inventory and command procedure.

More details can be obtained from the document 3GPP TR 38.769 v2.0.0, e.g. section 6.3.1.

Correspondingly, the Initial Trigger message may comprise suitable identification of a single loT device or a group of loT devices. Furthermore, in another example, the Initial Trigger message may not comprise any identification, in which case any and all loT devices that receive the Initial Trigger message could respond.

Under discussion are identifiers (IDs) for an loT device, including the exact format so as to uniquely identify an loT device. It can be expected that a larger number of loT devices will be operational within a network (or serviced by an access point). The loT device ID might have a large size in order to facilitate an unambiguous identification within the whole network.

Depending on the scope of the usage of an identifier, the requirement on the length of the identifier may be different. For example, for an AS-level (access stratum level) identifier, it may only be required to uniquely identify an A-loT device within the coverage of one reader or one base station. Such identifier may also referred to as first level identifier or AS-level identifier. In such case, short length such as 8 bits or 16 bits could be sufficient. As another example, an NAS-level (non-access stratum level) identifier used in core network is required to uniquely identify an A-loT device across multiple readers or multiple base stations, a longer length such as 64 bits might be required. Such identifier may also referred to as second level identifier or NAS-level identifier. As another example, if EPC (Electronic Product Code) is used as Device ID, it is designed to be unique across all physical objects in the world, over all time, and across all categories of physical objects. The size of EPC could be as large as around 100 bits. The EPC-like device ID is usually permanent, e.g. stored at the device non-volatile memory after it has been manufactured. Such identifier may also referred to as third level identifier or EPC-level identifier. In particular, a bit size of the third level identifier may be larger than a bit size of the second level identifier and/or the bit size of the second level identifier may be larger than a bit size of the first level identifier.

Reader can use an identifier, e.g. AS-level ID, or NAS-level ID, to address an A-loT device, e.g. for the purpose of D2R scheduling and R2D reception. Using an AS-level ID gives advantage of saving signaling overhead. For example, in contention-based random access (CBRA), the loT device may generate a first identifier, e.g. a 16-bit random ID also referred to as RN16, and sends it to reader. However, in contention-free random access (CFRA), it is still under discussion how the reader and device communicate an identifier, e.g. an identifier referred to as AS ID.

Details on the initial access (also called random access) for IoT communication have been discussed already in 3GPP.

For example, a first message, referred to in the following as Msg1, would be the first message from the loT device, in response to the initial trigger message (Msg0). This initial trigger message is referred to as step A in Fig. 5.

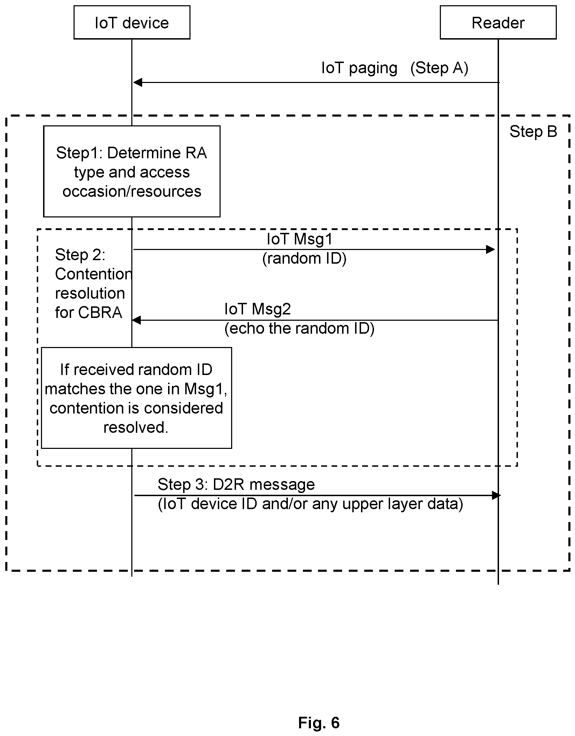

In more detail, when the loT device is triggered, it may perform some or all of the following three steps shown in Fig. 6.

Step 1, as shown in Fig. 6, the device may determine the access type, for example, it may determine the random access (RA) type. Further, in step 1, the device may determine an access occasion and/or resource. For example, if the device determines as RA type CBRA, the device may proceed to step 2 as indicated in Fig. 6. Alternatively, if the device determines, for example, CFRA, the device may proceed to step 3.

One example implementation of the initial access CBRA procedure may involve the following steps.

In case the device determines to proceed with step 2, as shown in Fig. 6, the loT device may transmit a Msg1 to the reader, which may include the first identifier, e.g. a random ID that is generated by the loT device (e.g. it may be generated randomly or generated based on the loT device ID) in response to the initial trigger message (Msg0). The length of the first identifier, e.g. choosing 16bits, may reduce the probability of two devices within the same coverage of reader generating the same random ID. Thus, a random ID collision is reduced to a negligible level. Sending the Msg1 can be seen as being part of step B.

Then, the reader may decide whether to reuse the first identifier or to assign a new identifier for a next message.

For example, the reader may transmit a Msg2 back to the loT device, echoing the ID (e.g. random ID) received in Msg1 (e.g. including the same received ID in Msg2). The Msg2 may optionally include further information, such as information on the occasion (e.g. time and/or frequency) for the loT device to transmit Msg3. Communicating the Msg2 can be seen as being part of step B.

The loT device considers the contention resolution as successful, if the Msg2 is received and for example includes the same random ID as in Msg1. In step 3, as indicated in Fig. 6, the loT device may transmit a Msg3 to the reader, including e.g. the device ID (such as a permanent device ID, e.g. and ID used on EPC-level, or ID used in core network, e.g. and ID used on NAS-level, and/or any other upper-layer data (depending on the upper-layer request). Communicating the Msg3 can be seen as being part of step B.

In the case of CBRA, since device already generates a random ID, and sends it to the reader in Msg1 for contention resolution, it is up to the reader to decide whether to reuse this random ID as an identifier for further communication or alternatively to assign an identifier provided by the reader.

For CFRA, the access procedure as shown in Figure 6 does not require the device to generate a random ID, 3GPP is still discussing how the device obtains an identifier for communicating with the reader.

As used herein, the "identifier provided by the reader" can be an identifier generated by the reader, for example. Alternatively, the identifier provided by the reader may, for example, be generated by the core network and provided to the device via the reader. In other words, the identifier provided by the reader is generated outside the device. For example, the identifier provided by the reader can be an AS ID. An AS-ID is, for example, an AS-layer identifier that the reader uses to address a particular device, e.g. for D2R purposes. For example, the identifier provided by the reader has fewer bits than the first identifier. For example, as discussed above, the first identifier has 16 bits.

### Further improvements

As can be seen from the above, 3GPP intends to implement an loT communication procedure according to which a reader is allowed to use an identifier provided by the reader. If the reader decides to assign such a reader provided identifier, it may inform the device in an R2D message. However, a plurality of messages may serve such purpose. For example, the message may be Msg2 discussed in Fig. 6, or the message indicated by C1, any subsequent R2D message after step C2. By agreement, it may be decided that the loT paging, i.e. step A in Figures 5 and 6, may not include an identifier provided by the reader.

Given such an identifier provided by the reader, it is unclear how the reader can know whether the loT device is using the identifier provided by the reader or continuing to use an old identifier, such as the first identifier. Furthermore, if the loT device is using the identifier provided by the reader, it remains unclear when the loT device begins to use that identifier provided by the reader. Similarly, the loT device cannot know whether the reader is using this new identifier provided by the reader or continuing to use an old identifier, such as the first identifier. Furthermore, if the reader is using the identifier provided by the reader, it remains unclear when the reader starts using this identifier provided by the reader.

The inventors have thus identified the possibility of defining an improved IoT communication method and parts thereof, which facilitate the satisfaction of the above-mentioned requirements and avoid one or more of the above-mentioned disadvantages. The present invention relates to various solutions and variants for such an improved IoT communication method, in particular to an improved loT communication method for an initial access of the loT device.

### Solutions

The present disclosure addresses the integration of A-loT devices into communication networks, particularly, 5G and future technologies.

It is noted that the present disclosure is not limited to A-loT devices. It may be also applicable to any other kind of IoT devices or to other devices with possibly substantial power limitations. For example, the terms IoT device and A-loT device are used interchangeably in this disclosure.

In the following, a reader communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **"mobile station"** or **"mobile node"** or **"user terminal** "or **"user equipment (UE)"** or **"IoT device"** or **"A-loT device"** is a **physical entity** (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"IoT device"** covers any loT devices (such as Ambient loT, Critical IoT, Massive IoT, etc.) but also other devices with possibly power or processing limitations. Correspondingly, the present disclosure is not limited to A-loT devices mentioned above, but may also be applicable to any other loT devices (e.g. other types, such as Critical IoT, Massive loT, Broadband loT, Narrow-Band IoT etc.) or even more generally to other devices that benefit from the improvements of the present disclosure. For example, the terms IoT device and A-IoT device are used interchangeably in this disclosure; alternatively, the term low-power-consumption device or low-complexity transceiver device could be used instead as well. Examples for A-IoT devices include - without any limitation - wearables, smart home devices, automotive devices, sensors, smart keys, healthcare devices, etc.

The term **"base station"** or **"radio base station"** or **"node"** or **"reader"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **"reader"** refers to an entity communicating with an A-loT device and, for example, receiving information from or transmitting information to the A-loT device; it may be also referred to as a "node". The "node/reader" can be e.g. a base station, or a UE or an intermediate node etc.

Communication between the A-loT device and the base station or an intermediate node is typically standardized and may be defined by different layers, such as PHY, MAC, RRC etc. (see above background discussion).

As used herein, the term **"message"** specifically refers to a formatted and standardized unit of data transmission that carries encapsulated information, including trigger signals (also referred to herein as triggering signals), paging signals, contention resolving signals, and data signals between devices or systems within a network. In the context of IoT or communication systems, a message can refer to a signal, used for a specific action or process, e.g. an access process, for example to resolve contention. For example, a first message may echo the first identifier, e.g. the random ID, and a second message may be a response to the first message.

As used herein, the term **"response"** refers to a reply or reaction provided by a receiving device or system, e.g. the loT device, in response to a received message, such as a trigger signal, a paging signal, contention resolving signals, or a data signal. It represents the acknowledgement or response sent back to the sender, e.g. the node, to indicate the outcome of the received message. Responses are used to acknowledge receipt, provide requested information, or indicate the success or failure of an operation. For example, the response is transmitted by the loT device in response to the message that echoes the first identifier, e.g. the above discussed Msg3.

As used herein, the term **"assigning"** involves allocating a unique number, code, or label to the loT devices to ensure proper routing, authentication, and service provisioning. Here, the identifier provided by the reader is received by the reader, and the identifier is used by the loT device in further communication with the reader.

The present disclosure relates to an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

For example, the following description discusses that the identifier provided by the reader is generated by the reader. However, the identifier may also be generated by the core network. In particular, the reader may be connected to the core network and receive the identifier from the core network.

According to an exemplary assumption in the following description with respect to the figures, a three-stage random access method is used. Alternatively, the mechanism described may be applicable to other access schemes, such as a two-stage random access process, a CFRA process, or the like.

In light of the discussion with CBRA, the figures discuss that the message containing the identifier provided by the reader additionally contains a first identifier, e.g., the random ID discussed above. However, the handshake mechanism does not necessarily require a message containing the first identifier. For example, in CFRA, the first identifier may not be generated by the loT device.

In particular, the mechanisms discussed are described in terms of an inventory only procedure or an inventory and/or command procedure. The solution can be used in access methods other than the inventory method and the command method.

For example, the purpose of command procedures is to implement changes or control the behavior of the network or devices in a controlled and deterministic manner. For example, the above usage type "inventory procedure" can be understood as an identification operation that may involve reading the device identification information stored in the loT device. The purpose of inventory procedures is, for example, to ensure that the network has up-to-date and accurate information about its components and resources.

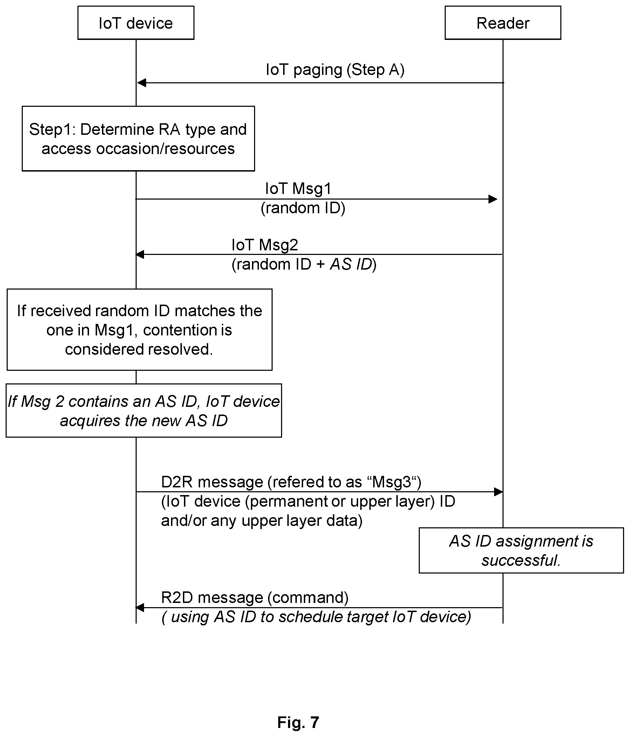

According to an exemplary assumption in the following description with respect to the figures, the loT device transmits a response to a second received message, e.g. Msg2 described in Fig. 7 above. The mechanism discussed can also be used in response to other messages, e.g. the initial paging message, e.g. Msg0 described above, or any other response to a message in D2R communication.

### Solution - handshake mechanism

It is provided an Internet of Things (IoT) device, e.g. an ambient loT (A-loT) device, comprising a circuitry, which, in operation, assigns (is configured to assign), an identifier provided by a reader, wherein the identifier provided by the reader (e.g. a temporary ID or a AS ID which is generated by the reader or by the core network) is comprised in a first message received from the reader (e.g. a message form the reader (e.g. Msg2 discussed in Fig. 6) comprising an echo of a first identifier (e.g. a random ID generated by the loT device or an old temporary ID) or a message from the reader (e.g. C1 discussed in Fig. 5) comprising a command); and a transceiver, which, in operation transmits (is configured to transmit) in response to assigning the identifier provided by the reader, a second message (e.g. Msg3 in Fig. 6 or C2 in Fig. 5). In other words, the R2D message for assigning the identifier provided by the reader, schedules a follow-up D2R transmission at the same time. In case of success, the reader successfully receives the scheduled D2R message. Then, the reader starts to use the identifier provided by the reader, and may stop using a first identifier, e.g. the random identifier referred to as RN16 or an old temporary ID.

It is further provided a reader (also referred to as node) comprising a transceiver, which in operation, transmits (is configured to transmit) a message (e.g. a message form the reader (e.g. Msg2 discussed in Fig. 6) comprising an echo of a first identifier (e.g. a random ID generated by the loT device or an old temporary ID) or a message from the reader (e.g. C1 discussed in Fig. 5) comprising a command) to an (IoT) device, e.g. an ambient loT (A-loT) device, wherein the message comprises an identifier provided by the reader (e.g. a temporary ID or a AS ID which is generated by the reader or by the core network); and a circuitry, which in operation, determines (is configured to determine) based on whether or not receiving a response (e.g. Msg3 in Fig. 6 or C2 in Fig. 5) to the message whether the identifier provided by the reader is assigned to the loT device. In other words, the reader receives the response or the reader does not receive (for example at a scheduled resource or within a certain time) the response. The solution, i.e. the reader receives the response, will be discussed in detail with reference to Fig. 7. The handling of failure, i.e. the reader does not receive the response, will be discussed below in the modifications.

An example implementation of the solution is shown in Figure 7, which is similar to Figure 5. For a detailed explanation of the steps, reference is made to the description above. In particular, as discussed above in Fig. 5, the process in Step A includes receiving a paging message and Step 1. Similar to Fig. 5, an access type is determined in Step 1.

In the example in Fig. 7, CBRA is shown. In particular, the signaling diagram comprises a Step 2, in which the circuitry, in operation, generates a first identifier, e.g. the random ID, and communicates the first identifier with Msg1 to the reader. In particular, as discussed above, the first identifier may be generated during the access procedure. Further, the circuitry, in operation, stores the first identifier. Thus, this first identifier is stored before receiving a subsequent message, referred to above as the first message.

As discussed above, storing the first identifier is not necessary for the present solution. For example, in CFRA, a first identifier may not be stored because Step 2 is optional for CFRA. Nevertheless, the loT device may store in other access procedures such as CFRA a first identifier, for example an identifier used in a previous communication.

Further, as shown in Fig. 7, in response to the message comprising the first identifier, the reader transmits a Msg2 back to the loT device, echoing the ID (e.g. random ID) received in Msg1 (e.g. including the same received ID in Msg2).

The Msg2 is an example of the first message discussed in the solution. The first message comprises the identifier provided by the reader, referred to as AS ID in Fig. 7. In particular, in the example shown in Fig. 7, the first message additionally comprises the first identifier is generated by the loT device, e.g. the random ID.

In the example shown in Fig. 7, if the device receives the same first identifier, e.g. the random ID, as previously transmitted in Msg1, it considers contention resolution is successful. In other w words, the circuitry, in operation, determines a contention resolution with the reader based on the first identifier. As discussed above, the first message may not comprise the first identifier. For example, in CFRA, a first identifier may not be comprised in the first message. According to a further example, the reader (e.g. on a AS-level) or the core network (e.g. on a NAS-level or EPC-level) may provide the identifier provided by the reader based on the first identifier, for example by generating the identifier provided by the reader based on the first identifier. The identifier provided by the reader can be generated based on the first identifier for example by using predefined parts of the first identifier.

Then, the loT device may determine or assume that the first message comprises an identifier provided by the reader. For example, the first message may have the following format shown in table 1:

**Table 1:**

| Field #1 | Field #2 | Field #n |
|---|---|---|
| First identifier (e.g. random ID) | Identifier provided by the reader | Other information: e.g. Resource allocation for follow-up D2R message |

For example, the first message may comprise a plurality of fields as shown in Table 1. In particular, a first device identifier field #1 of the first message is for addressing a target device, e.g. the echo of the first identifier. Further, the first message may comprise a second device identifier field #2, which is for example subsequent to Field#1. Field#2 for example comprises the identifier provided by the reader, e.g. an AS ID for the target device indicated by first field. If the message comprises field #2, the loT device may determine that the message comprises the identifier provided by the reader. Additionally or alternatively, the loT device may determine based on a flag in one of fields of the Table 1 (e.g. field #1, field #2, or field #n) that the first message comprises the identifier provided by the reader. In particular, dedicated resources, e.g. predefined resources or preconfigured resources, may be reserved or used to communicate the identifier provided by the reader and or the flag. According to further example, a message type indication may be defined to indicate that this particular message is for assigning an AS ID for the target device. In such case, device would expect, e.g. both fields #1 and #2.

According to further example, reader may assign multiple AS IDs to multiple different devices using one single first message. In such case, multiple pairs of two fields will be present in the message. See the following table 2 for an example, where the pair (field#1, field#2) is for a first device, and the pair (field#3, field#4) is for a second device.

**Table 2:**

| Field #1 | Field #2 | Field #3 | Field #4 | Field #n |
|---|---|---|---|---|
| First identifier (e.g. random ID) for a first device | Identifier provided by the reader for a first device | First identifier (e.g. random ID) for a second device | Identifier provided by the reader for a second device | Other information: e.g. Resource allocation for follow-up D2R message |

Further, after determining that the first message comprises the identifier provided by the reader, the loT assigns the identifier provided by the reader. This facilitates that the reader and the loT have common understanding of how and when the identifier provided by the reader is assigned to the loT device.

Further, in response to the determination to assigning the identifier provided by the reader, the loT device transmits a second message to the reader. This facilitates that the reader and the loT have common understanding of how and when the reader is informed that the identifier provided by the reader is assigned to the loT device.

This second message may comprise at least one of the identifier provided by the reader and the first identifier such as an identifier generated by the loT device. In particular, the second message may comprise only one identifier. This only one identifier may be the identifier provided by the reader, e.g. an AS-level identifier having for example a length of 8 bits. In other words, the second message may not comprise the first identifier, e.g. the random ID having a for example a length of 16 bits. This facilitates that a first identifier, which may be for example used for contention resolution, may be substituted with the identifier provided by the loT. For example, the identifier provided by the reader may have less bits than the first identifier.

Alternatively, this second message may comprise neither the first identifier nor the identifier provided by the reader. Instead, device permanent ID or EPC-like ID can be included.

Alternatively, this second message may not comprise any device identifier. Since this second message is scheduled by the reader, reader knows exactly which device and at which radio resource(s) (frequency-time resources) to expect this second message. Even though there is no device identifier included in this second message, reader would not be confused about the target device who has sent this message.

Additionally or alternatively, the second message may comprise for example upper layer data. As used herein, **upper layer data** refer to higher-level information that originates from or is processed by the application or non-access stratum (NAS) layers.

Additionally or alternatively, the second message may comprise inventory data of the loT device and/or user data of the loT device. Inventory data of the loT device could be, e.g. a device permanent identifier, an upper layer (e.g. NAS) temporary identifier.

As used herein, **user data** refers to the actual information generated, transmitted, or received by the loT device. It may exclude control or signaling data and may consist of meaningful content that the device transmits with, e.g. sensor data.

Additionally or alternatively, the inventory data may comprise health parameters of the loT device, e.g. an energy status of the loT device. Additionally or alternatively, the user data may comprise the health parameters of the loT device.

In the example shown in Fig. 7, the second message transmitted in response to assigning the identifier provided by the reader is referred to as Msg 3. For example, in view of Fig. 5, the second message may be the D2R message transmitted in step B. Alternatively, even not shown in Fig. 7, the second message may be any of the D2R message mentioned in Fig. 5, e.g. the message C2 or any other message transmitted in D2R during data transmission in step C.

In summary, as long as device successfully receives the first message, the loT device assigns the identifier provided by the reader, e.g. a new AS ID. Further, as long as the reader successfully receives the second message, e.g. the scheduled D2R message, the reader may start to use the identifier provided by the reader, e.g. the new AS ID, and may stop using an old identifier, e.g. the first identifier. Fig. 7 shows an example using Msg2 to assign the identifier provided by the reader. In particular, Fig. 7 discusses by way of example the CBRA case. This solution facilitates that in case the reader successfully receives Msg3, the reader can confirm that Msg2 carrying identifier provided by the reader has been successfully received by the loT device, which means the identifier provided by the reader assignment has been successful. As shown in Fig. 7, in the next R2D message, which may be for example part of the command procedure, e.g. step C1 in Fig. 5, the reader will address device by its newly assigned identifier provided by the reader.

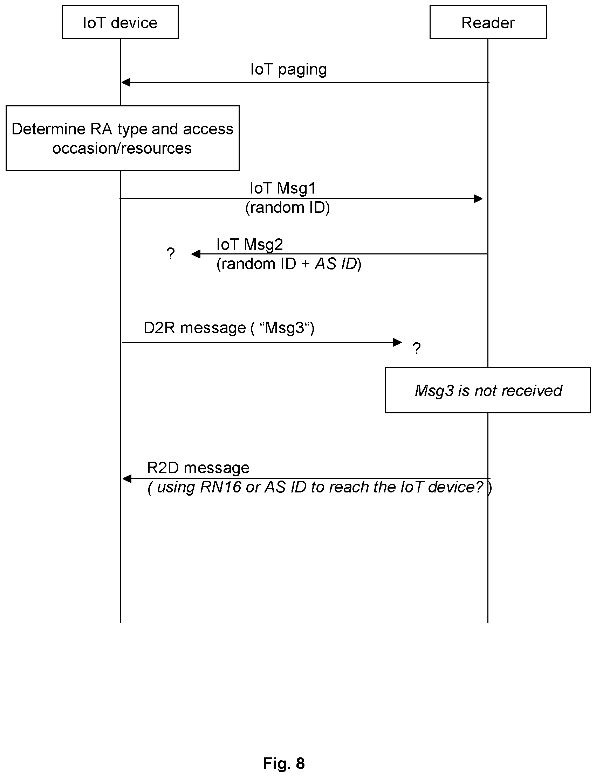

However, as discussed in Fig. 8, it is possible that the second message, e.g. the scheduled D2R message in the example of Fig.7 titled Msg3, is not received by the reader. Thus, the reader cannot distinguish at least the following two cases.

The first case is that the first message, in the example in Fig. 7 Msg2 carrying identifier provided by the reader, is missed by the loT device. This implies that the identifier provided by the reader is not assigned by the loT device.

The second case is that the loT device has successfully received Msg2 but Msg3 delivery fails. This implies that the identifier provided by the reader is assigned by the loT device. However, the reader does not receive the confirmation.

The impossibility to distinguish the two cases causes in the next R2D message that it is unclear how the reader should address the loT device. Namely should the reader use the first identifier, e.g. the random ID referred to as RN16 or the identifier provided by the reader, e.g. the AS ID.

The following various implementations discuss the handling of the failure case discussed in Fig. 8. The following described implementations may be combined with the above solution.

### 1^{st} Implementation - re-rend first message

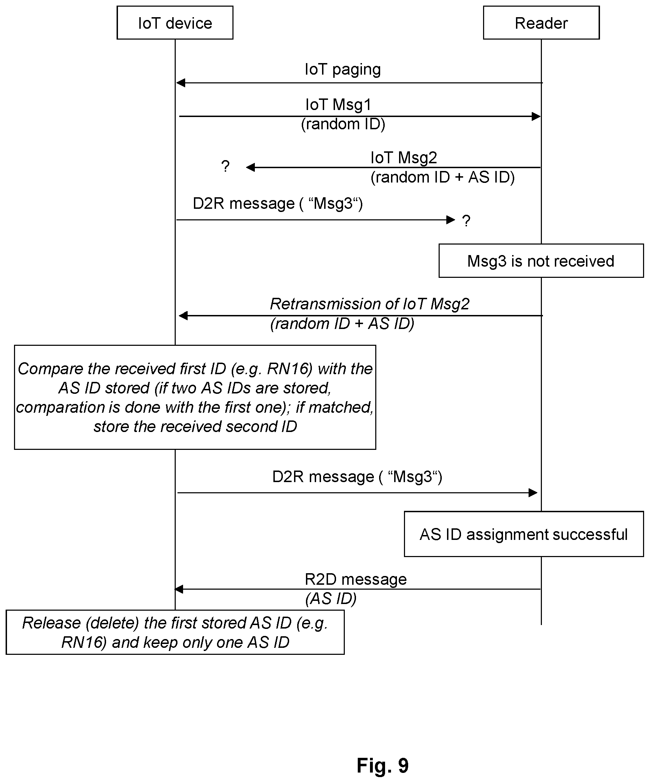

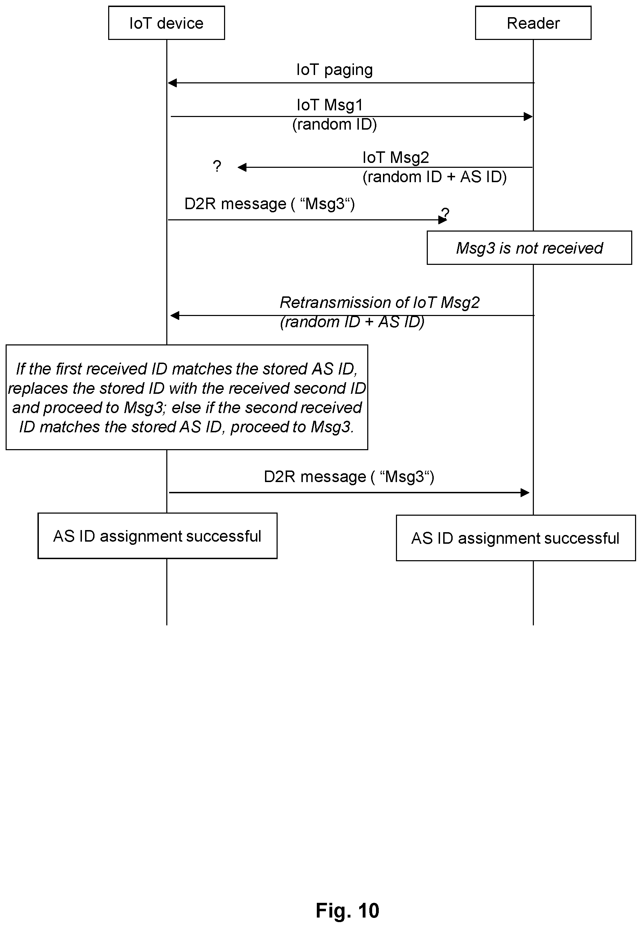

Given the errors discussed in Figure 8, the reader may retransmit the first message. For example, in the case of the CBRA, the reader may determine that the Msg3 delivery failed. In response to this determination, the reader may retransmit the first message as shown in Figures 9 and 10.

In the first implementation, it is assumed that the loT device has a memory unit for storing a first identifier or receives a first identifier. For example, the first identifier may be any identifier, e.g. an EPC-level ID, a NAS-level ID or a AS-level ID, which identifies the device. In particular, the first identifier may be generated by the loT device, for example in response to an loT paging. Alternatively or additionally, the loT stores the first identifier prior to receiving the first message. Alternatively or additionally, the first message comprises a first identifier.

According to a 1^{st} option, the device may keep both the identifier provided by the reader, e.g. a newly acquired AS-ID, and the above discussed first identifier, e.g. RN16, as its identifier until it receives another R2D message.

According to a 2^{nd} option, as long as the device successfully receives the first message, it starts to use the identifier provided by the reader, i.e. the newly acquired identifier provided by the reader, e.g. the AS-ID, as its identifier and stops using the old one, e.g. the first identifier, i.e. keeps only the latest identifier, e.g. the identifier provided by the reader, as its identifier.

### 1^{st} Option of the 1^{st} implementation - keep both identifiers

The 1^{st} option of the 1^{st} implementation is shown in Fig. 9.

In a first step, after the loT device successfully receives the first message, here the loT Msg2 which is also referred to as assignment message, it acquires the identifier provided by the reader, here referred to as the AS ID, and keeps both the identifier provided by the reader and the first identifier, e.g. RN16, as its identifier. In other words, the device keeps the first identifier the identifier provided by the reader in addition to the first identifier.

If the loT device has not received the first message, such as loT Msg2 in Figure 9, the loT device has only stored a first identifier, such as a previous identifier, which can be an identifier previously provided by the reader or generated by the loT device, such as RN16. The previous identifier is referred to as the old identifier. In other words, the loT device has at least the old ID, e.g. RN16, an old AS-ID or an old NAS-ID, as its first identifier for addressing. Based on this first identifier, the loT device can be identified.

Then, in a second step, if the first message has been received in the first step, the loT device sends the second message, e.g., the scheduled D2R, referred to as Msg3 in Fig. 9, to the reader in response to the assignment of the identifier provided by the reader in the first message, i.e., the assignment message.

If the reader does not receive the second message, e.g. the scheduled D2R message, in a third step the reader retransmits the association message containing both the first identifier, i.e. the old identifier, e.g. RN16, and the identifier provided by the reader, i.e. the new identifier. The message can be, for example, as discussed above with reference to Table 1.

In a fourth step, the device compares the stored first identifier, i.e., the old ID, with the received first identifier contained in the first message. If the stored first identifier matches the received first identifier, the loT device determines that it is the target device and proceeds to the first step. Otherwise, the loT device is not the target and the device does not respond. For example, the loT device takes no action and does not respond to the message.

In the fifth step, the reader successfully receives the second message, i.e. the scheduled D2R. Otherwise, if the reader does not receive the second message, it goes to the third step. The received second message enables the reader to be informed that the user has assigned the identifier provided by the reader.

In a sixth step, the reader sends a third message, i.e. another R2D message, to the loT device. The third message may contain as identifier only the identifier provided by the reader, e.g. the new AS-ID. In other words, the third message does not include the first identifier. Finally, in a seventh step, the loT device receives this third message, i.e., the R2D message containing, for example, only the new AS ID. Upon receiving the third message, the loT device may release the stored first identifier and retain only the identifier provided by the reader.

The third message may have the format shown in Table 3:

**Table 3:**

| Field #1 | Field #n |
|---|---|
| Identifier provided by the reader | Other information: e.g. Resource allocation for follow-up D2R message |

In other words, the circuitry, in operation, deletes the first identifier after transmitting the second message. In particular, the circuitry, in operation, deletes the first identifier in response to receiving a response to the second message, i.e. the third message in Fig. 9. For example, the response comprises the identifier provided by the reader, i.e. comprises as the only identifier the identifier provided by the reader. In other words, the response does not comprise the first identifier.

According to the 1^{st} option, the reader always relies on the first identifier, such as an old AS ID and old NAS ID or RN16, to address the loT device when the reader is uncertain whether or not the loT device has acquired the identifier provided by the reader. Upon receipt of the first message containing the identifier provided by the reader, the loT device retains both identifiers. In particular, the loT device may delete the first identifier based on receiving further confirmation from the reader, e.g., the third message, which is, for example, a response to the second message.

### 2^{nd} Option of the 1^{st} implementation - replace identifier

The 2^{nd} option of the 1^{st} implementation is shown in Fig. 10.

In a first step, after the loT device has successfully received the first message, here IoT Msg2, it acquires the identifier provided by the reader, referred to as AS-ID in Fig. 10. In other words, the circuitry, in operation, compares the received first identifier, e.g. the received random ID in Fig. 10, with a stored first identifier, e.g. the stored random ID in Fig. 10, stored at the loT device.

Additionally, as discussed in the solution, the loT device assigns the identifier provided by the reader as its identifier.

According to the 2^{nd} option, the loT deletes the stored or replaces the first identifier, e.g. RN16. In other words, in case the received first identifier matches the stored first identifier stored at the loT device, the loT device replaces the stored first identifier stored at the loT device with identifier provided by the reader. Thus, if the loT device does not receive the first message, the loT device has still the first identifier as its identifier.

In a second step, if the first message has been received in the first step, the loT device sends the second message, e.g., the scheduled D2R, referred to as Msg3 in Fig. 10, to the reader in response to the assignment of the identifier provided by the reader in the first message, i.e., the assignment message.

If the reader does not receive the second message, e.g. the scheduled D2R message, in a third step the reader retransmits the first message containing both the first identifier, i.e. the old identifier, e.g. RN16, and the identifier provided by the reader, i.e. the new identifier. The message can have, for example, the format as discussed above with reference to Table 1 or Table 2.

In a fourth step, the device compares the stored first identifier, i.e. old ID, with the received first identifier comprised in the retransmitted first message and then with the identifier provided by the reader comprised in the retransmitted first message.

If the stored first identifier matches the received first identifier, the loT device determines that it is the target device. The process continues with the first step.

Else, if the stored first identifier matches the received identifier provided by the reader, the loT device determines that it is the target device and that the identifier provided by the reader has already been updated. In other words, the circuitry, in operation, compares the identifier provided by the reader, in Fig. 10 referred to AS-ID, with the stored first identifier, and in case the circuitry, in operation, determines that the identifier provided by the reader matches the stored first identifier stored at the loT device, here the loT has already updated the first identifier with the identifier provided by the reader, the transceiver, in operation, transmits, the second message to the reader. The process continues with the second step.

Otherwise, the loT device is not the target and the device does not respond. For example, the loT device takes no action and does not respond to the message.

In the fifth step, the reader successfully receives the second message, i.e. the scheduled D2R. Otherwise, if the reader does not receive the second message, the reader proceeds to the third step.

For example, the first message can be as discussed above with reference to Table 1. Here, Field #2 has a dual function. As discussed with reference to Table 1, Field #2 assigns the identifier provided by the reader, such as the new AS ID, to the target device indicated by Field #1. In addition, Field #2 has the function of addressing the same target device as Field #1. For example, it may be implicitly determined that Field #2 has a dual function, e.g., based on the existence of Field #2.

Additionally or alternatively, the loT device may be explicitly informed that Field#2 has a dual role. For example, the first message may additionally contain a type specification or a flag, as for example shown in Table 4, indicated in Field #0. In this way, the first message of the second option can be distinguished from the first message of the first option.

**Table 4:**

| Field #0 | Field #1 | Field #2 | Field #n |
|---|---|---|---|
| Typ indication | First identifier (e.g. random ID) | Identifier provided by the reader | Other information: e.g. Resource allocation for follow-up D2R message |

Not shown in Fig. 10 is that, as in Fig. 9, the reader sends a third message, i.e. another R2D message, to the loT device. The third message may contain as identifier only the identifier provided by the reader, e.g. the new AS-ID. In other words, the third message does not include the first identifier.

The third message may have the format shown in Table 3:
Different to the 1^{st} option, upon receiving the third message, the loT does not release the stored first identifier as it has already been replaced it in first step.

According to the 2^{nd} option, the same loT device is addressed by two identifier fields. The second field, here Field #2, has a dual function, namely identifying the same device as the first field and assigning the identifier provided by the reader, i.e. the new AS ID, to the loT device if device has not yet acquired it. This facilitates that the device may store only one identifier, e.g. the latest assigned identifier such as the new AS-ID, without causing ambiguity.

### 2^{nd} implementation - reader assumes replaced identifier

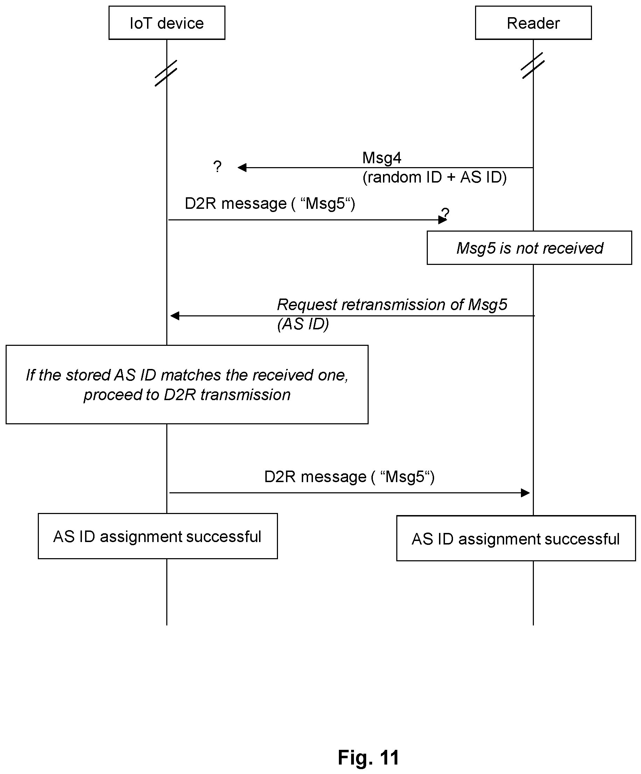

The 2^{nd} implementation is shown in Fig. 11. This implementation is similar to the 2^{nd} option of the 1^{st} implementation. Alternatively, the 2^{nd} implementation assumes that for example contention has been successfully resolved, for example by a CFRA or after a successful CBRA.

Similar to the 2^{nd} option of the 1^{st} implementation, in a first step, after the loT device has successfully received the first message, here IoT Msg4, the loT device acquires the identifier provided by the reader, referred to as AS-ID in Fig. 11. In other words, the circuitry, in operation, compares the received first identifier, e.g. the received random ID in Fig. 11, with a stored first identifier, e.g. the stored random ID in Fig. 11, stored at the loT device.

Additionally, as discussed in the solution, the loT device assigns the identifier provided by the reader as its identifier.

In a second step, if the first message has been received in the first step, the loT device sends a response, i.e. the second message, e.g., the scheduled D2R, referred to as Msg5 in Fig. 11, to the reader in response to the assignment of the identifier provided by the reader in the first message, i.e., the assignment message.

If the reader does not receive the response, e.g. the scheduled D2R message, in a third step, the reader retransmits the first message, in Fig.11 referred to as request retransmission of Msg5, containing the identifier provided by the reader, i.e. the new identifier referred to as AS-ID and not containing the first identifier, i.e. the old identifier, e.g. RN16. In other words, the message, e.g. in Fig. 11 the request for retransmission of Msg5, is a retransmission of a previous message, e.g. Msg. 4 in Fig. 11, the previous message comprises the identifier provided by the reader, e.g. the AS-ID. In other words, the message may comprise as the only identifier the identifier provided by the reader. Optionally, the previous message additionally comprises the above discussed first identifier, which is for example generated by the loT device. This is based on the assumption that R2D reception failure (e.g. failure of Msg4 in Fig. 11) is less likely than D2R transmission failure (e.g. failure of Msg5 in Fig. 11). In other words, the message that is the retransmission of the previous message does not need to comprise the first identifier because the device is likely to have received successfully the first message.

As in the fourth step of 2nd implementation, the device compares the stored identifier with the identifier provided by the reader comprised in the retransmitted message.

If the stored first identifier matches the received identifier provided by the reader, the loT device determines that it is the target device. The process continues with the second step. In other words, based on the assumption that R2D reception failure is less likely than D2R reception failure, the stored first identifier is likely to have been updated in the first step.

If the stored first identifier not matches the received identifier provided by the reader, the loT device is not the target and the device does not respond. For example, the loT device takes no action and does not respond to the message. This implementation may in particular used with the 2^{nd} option of the 1^{st} implementation.

In the fifth step, the reader successfully receives the response, i.e. the scheduled D2R referred to in the above as the second message. In other words, the circuitry, in operation, determines in response to receiving the response to the message that the identifier provided by the reader is assigned to the loT device.

Otherwise, if the reader does not receive the response, the reader may terminate the process and start with a new paging round, i.e. start with step A. In other words, the reader determines in response to not receiving the response, in particular in response to not receiving the response to the message that is retransmission of the previous message, to send an initial paging message to the loT device

### 3^{rd} implementation - reader receives no response

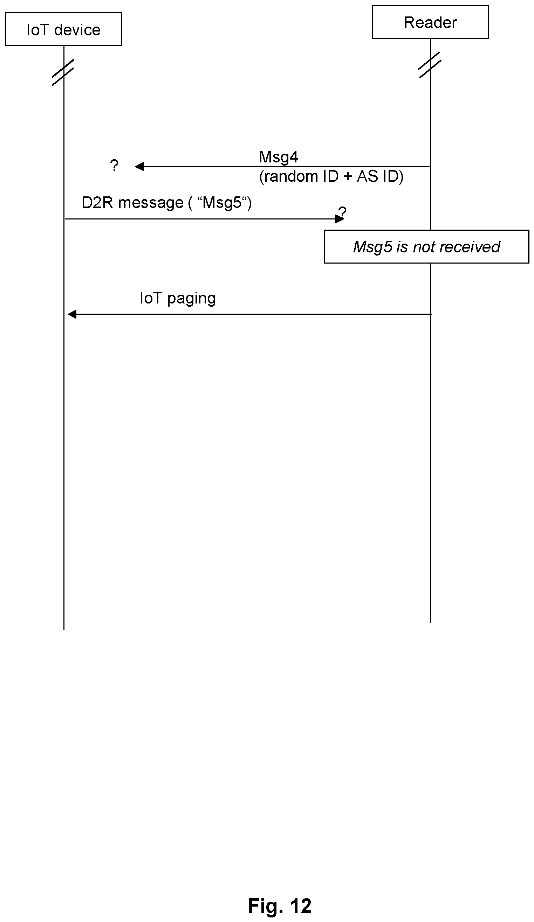

The 3^{rd} implementation is shown in Fig. 12. This implementation is similar to the fifth step of the 2nd implementation. If the scheduled D2R message by AS ID assignment message is not received by reader, reader does not attempt retransmission. In other words, the reader determines in response to not receiving the response to the message, to send an initial paging message to the loT device. Thus, the loT device responds to the new paging and an assignment of an identifier provided by a reader, e.g. the AS ID assignment, can start from scratch.

### Further considerations

The disclosed mechanisms for assignment an identifier provided by the reader are not limited to using message during an access procedure, e.g. Msg2. The solution and the implementations can be other R2D messages. E.g. Msg4, which may be step C1 in Fig.5, or any follow-up R2D message after step C2 in Fig. 5. In other words, the transceiver of the loT device, in operation, may receive the first message, wherein the first message is received during an access procedure of the loT device with the reader. Alternatively, the transceiver of the loT device, in operation, may receive the first message, wherein the first message is received during data transmission. In particular, the second message is part of a subsequent procedure to subsequent to the access procedure.

The disclosed assignment mechanism discloses assigning an identifier provided by the reader. This identifier provided by the reader is not limited to assigning the above discussed AS ID, e.g. an identifier generated by the reader. It can be used to assign a new temporary ID that may be used and/or generated by core network.

When assigning a new AS ID, the disclosed assignment mechanism is not limited to changing RN16 to a new AS ID. It can be used to change from RN16 to a first AS ID, and then from the first AS ID to a second AS ID, and etc. In other words, the identifier provided by the reader can be used to change an identifier generated by the loT device, e.g. the random ID, or a previous identifier provided by the reader.

### Further implementations

As mentioned above, functionality of an identifier provided by the reader is a study topic. With the sole possibility, it is unclear how the reader and device can develop a common understanding when usage of this identifier provided by the reader starts.

To facilitate the communication considering the mentioned limitations, the loT device transmits in response to assigning the identifier provided by the reader a next scheduled response. Thus, a hand shaking mechanism between reader and device is defined for assignment of identifier provided by the reader. In particular, the reader successfully receives the scheduled D2R message. Thus, the reader starts to use the new identifier provided by the reader and stops using the old identifier (e.g. RN16). When the device receives successfully the message for assignment the identifier provided by the reader, the device assigns the identifier provided by the reader and notifies the reader by transmitting the scheduled D2R message.

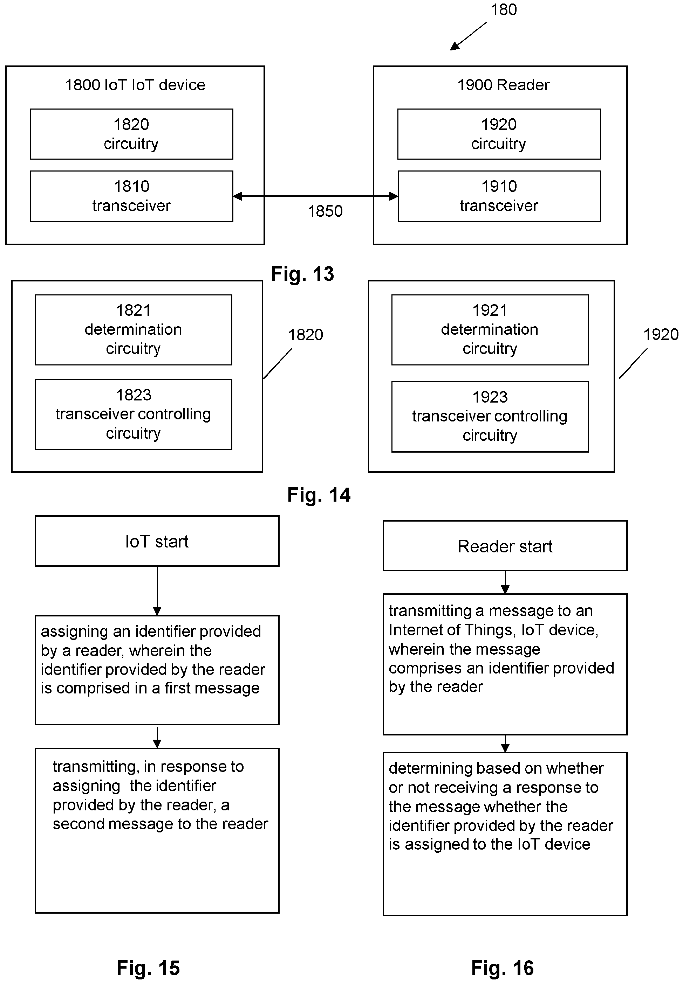

**Fig. 13** illustrates a general, simplified and exemplary block diagram of an IoT device 1800 and a reader (base station or intermediate node connected to a base station) 1900 forming a communication system 180. In the following, it is exemplarily assumed that reader 1900 is a base station functioning as a scheduling device like an eNB or gNB (network node). The loT device 1800 may be a wearable, smart home device, automotive device, sensor, smart key, or healthcare device, for example.

The loT device 1800 and the base station 1900 (eNB/gNB) are communicating with each other over a (wireless) physical channel 1850, respectively, using their transceivers 1810 (IoT device side) and 1910 (base station side). The base station 1900 and the loT device 1800 are capable of transmitting as well as receiving radio signals via the channel 1850. Together, the base station 1900 and the loT device 1800 form a communication system 180, for example, a 5G or future communication system. The communication system 180 may further include other entities such as further base stations, intermediate nodes and/or loT devices. Any of the above-described solutions and the implementations may be implemented in the A-IoT device 1800, the base station 1900 and/or communication system 180 where appropriate.

The loT device 1800 comprises a transceiver 1810 and a (processing) circuitry 1820, and the base station 1900 comprises a transceiver 1910 and a (processing) circuitry 1920. The transceiver 1810, 1910 in turn comprise and/or function as a receiver and/or a transmitter. In this disclosure, in other words, the term "transceiver" is used for hardware and/or software components that allow the loT device 1800, and the base station 1900 to transmit and/or receive radio signals over the wireless channel 1850, for example, a physical channel. Moreover, the term "circuitry" includes processing circuitry formed by one or more processors or processing units, etc.

The circuitry 1820 may perform any determinations and operations described above with respect to the embodiments. The transceiver 1810 may transmit and/or receive signals as described with respect to the embodiments. The circuitry 1820 may control the transceiver 1810 to perform the transmissions and/or receptions.

The circuitry 1920 may perform any determinations and operations described above with respect to the embodiments. The transceiver 1910 may transmit and/or receive signals as described with respect to the embodiments. The circuitry 1920 may control the transceiver 1910 to perform the transmissions and/or receptions.

In some embodiments, the circuitry 1820 of the loT device 1800 assigns an identifier provided by a reader, wherein the identifier provided by the reader is comprised in a first message. The transceiver 1810 of the loT device 1800 transmits, in response to assigning the identifier provided by the reader, a second message to the reader.

In some embodiments, the transceiver 1910 of the reader 1900 communicates a message in a first access procedure, wherein the message comprises an identifier provided by the reader. The circuitry 1920 of the reader 900 determines, based on whether or not receiving a response to the message whether the identifier provided by the reader is assigned to the loT device.

The circuitries may be configured by software to perform the functions as described in any of the above embodiments. As shown in **Fig. 14** the circuitry 1820 of the loT device may further comprise a functional module referred to as determination circuitry 1821 for performing the determination. A transceiver controlling circuitry 1823 is a functional module that controls the transceiver 1810 (in Fig. 13) to receive the message. Moreover, as shown in **Fig. 14****,** the circuitry 1920 of the base station or an intermediate node may further comprise a functional module referred to as determination circuitry 1921 for performing any determinations. A transceiver controlling circuitry 1923 is a functional module that controls the transceiver 1910 (in Fig. 13) to transmit the message.

A corresponding exemplary method for an loT device, as shown in **Fig. 15****,** comprises the following steps performed by an IoT device:
assigning an identifier provided by a reader, wherein the identifier provided by the reader is comprised in a first message; and
transmitting, in response to assigning the identifier provided by the reader, a second message to the reader.

A corresponding exemplary method for node, as shown in **Fig. 16****,** comprises the following steps performed by a reader:
transmitting a message to an Internet of Things, IoT device, wherein the message comprises an identifier provided by the reader;
determining based on whether or not receiving a response to the message whether the identifier provided by the reader is assigned to the loT device.

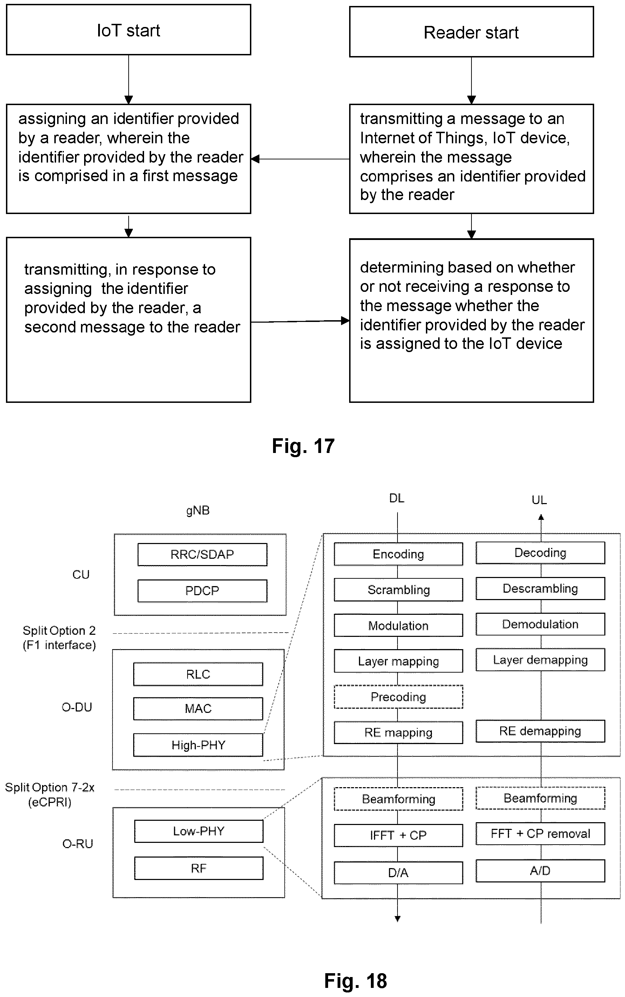

**Fig. 17** is a signaling diagram of an exemplary and simplified implementation of the improved transmission procedure, illustrating the exchange of common understanding between the different participating entities (here the loT device and the reader) and the steps performed at these entities. The loT behavior and node behavior follow the above described IoT device and reader and the respective methods.

Moreover, it is noted that the loT device as described in the above, for example in any of the above embodiments, implementations, modifications, solutions, variants and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the reader. Further, in the above, in particular the loT device has been describe. Any of the integration to the loT device may be integrated in the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 18** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient IoT Reader and an Ambient IoT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a statellite or a High Altitude Pseudo Statellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient IoT Device or an Ambient IoT Reader.

The Ambient IoT Device may be a wireless communication device having a backscattering function or having a transmission/reception bandwidth of several resource blocks or less. Further, the Ambient loT Reader may be a wireless communication device having a communication function with an Ambient IoT Device. The Ambient IoT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a statellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

The following numerated clauses relate to aspects of the invention.

Aspect 1: An Internet of Things, loT, device comprising: a circuitry, which in operation, assigns an identifier provided by a reader, wherein the identifier provided by the reader is comprised in a first message; and a transceiver, which in operation, transmits, in response to assigning the identifier provided by the reader, a second message to the reader.

Aspect 2: The loT device according to aspect 1, wherein the circuitry, in operation, stores a first identifier before receiving the first message.

Aspect 3: The loT device according to aspect 2, wherein the circuitry, in operation, generates the first identifier during an access procedure.

Aspect 4: The loT device according to any one of aspects 1 to 3, wherein the first message comprises a first identifier.

Aspect 5: The loT device according to aspect 4, wherein the first identifier is generated by the loT device.

Aspect 6: The loT device according to aspect 5, wherein the circuitry, in operation, determines a contention resolution with the reader based on the first identifier.

Aspect 7: The loT device according to any one of aspects 2 to 6, wherein the circuitry, in operation, deletes the first identifier after transmitting the second message.

Aspect 8: The loT device according to aspect 7, wherein the circuitry, in operation, deletes the first identifier in response to receiving a response to the second message; optionally wherein the response comprises the identifier provided by the reader optionally wherein the response does not comprise the first identifier.

Aspect 9: The loT device according to any one of aspects 4 to 8, wherein the circuitry, in operation, compares the received first identifier with a stored first identifier stored at the loT device.

Aspect 10: The loT device according to aspect 9, wherein the circuitry, in operation, in case the received first identifier matches the stored first identifier stored at the loT device, replaces the stored first identifier stored at the loT device with identifier provided by the reader.

Aspect 11: The loT device according to any one of aspects 9 to 10 wherein the circuitry, in operation, compares the identifier provided by the reader with the stored first identifier, and in case the circuitry, in operation, determines that the identifier provided by the reader matches the stored first identifier stored at the loT device, the transceiver, in operation, transmits, the second message to the reader.

Aspect 12: The loT device according to any one of aspects 2 to 11, wherein the identifier provided by the reader has less bits than the first identifier.

Aspect 13: The loT device according to any one of aspects 2 to 12, wherein the first identifier is a 16-bit random ID.

Aspect 14: The loT device according to any one of aspects 1 to 13, wherein the second message comprises at least one of the identifier provided by the reader; an identifier generated by the loT device; upper layer data; inventory data of the loT device; and user data of the loT device.

Aspect 15: The loT device according to any one of aspects 1 to 14, wherein the transceiver, in operation, receives the first message, wherein the first message is received during an access procedure of the loT device with the reader.

Aspect 16: The loT device according to aspect 15, wherein the second message is part of a subsequent procedure subsequent to the access procedure.

Aspect 17: A method comprising the following steps performed by an Internet of Things, loT, device: assigning an identifier provided by a reader, wherein the identifier provided by the reader is comprised in a first message; and transmitting, in response to assigning the identifier provided by the reader, a second message to the reader.

Aspect 18: A reader comprising, a transceiver, which in operation, transmits a message to an Internet of Things, loT device, wherein the message comprises an identifier provided by the reader; a circuitry, which in operation, determines based on whether or not receiving a response to the message whether the identifier provided by the reader is assigned to the loT device.

Aspect 19: The reader according to aspect 18, wherein the message is a retransmission of a previous message, the previous message comprises the identifier provided by the reader.

Aspect 20: The reader according to aspect 19, wherein the previous message additionally comprises a first identifier.

Aspect 21: The reader according to aspect 20, wherein the first identifier is generated by the loT device.

Aspect 22: The reader according to any one of aspects 20 to 21, wherein the message that is the retransmission of the previous message does not comprise the first identifier.

Aspect 23: The reader according to any one of aspects 18 to 22, wherein circuitry, in operation, determines in response to receiving the response to the message that the identifier provided by the reader is assigned to the loT device.

Aspect 24: The reader according to any one of aspects 18 to 22, wherein circuitry, in operation, determines in response to not receiving the response to send an initial paging message to the loT device.

Aspect 25: A method comprising the following steps performed by a reader: transmitting a message to an Internet of Things, loT device, wherein the message comprises an identifier provided by the reader; determining based on whether or not receiving a response to the message whether the identifier provided by the reader is assigned to the loT device.

## Claims

1. An Internet of Things, loT, device comprising:
a circuitry, which in operation, assigns an identifier provided by a reader, wherein the identifier provided by the reader is comprised in a first message; and
a transceiver, which in operation, transmits, in response to assigning the identifier provided by the reader, a second message to the reader.

2. The loT device according to claim 1, wherein the circuitry, in operation, stores a first identifier before receiving the first message;
optionally wherein the circuitry, in operation, generates the first identifier during an access procedure;
optionally wherein the identifier provided by the reader has less bits than the first identifier; optionally wherein the first identifier is a 16-bit random ID.

3. The loT device according to any one of claims 1 to 2, wherein the first message comprises a first identifier;
optionally wherein the first identifier is generated by the loT device;
optionally wherein the circuitry, in operation, determines a contention resolution with the reader based on the first identifier;
optionally wherein the identifier provided by the reader has less bits than the first identifier; optionally wherein the first identifier is a 16-bit random ID.

4. The loT device according to any one of claims 2 to 3, wherein the circuitry, in operation, deletes the first identifier after transmitting the second message.

5. The loT device according to claim 4, wherein the circuitry, in operation, deletes the first identifier in response to receiving a response to the second message;
optionally wherein the response comprises the identifier provided by the reader;
optionally wherein the response does not comprise the first identifier.

6. The loT device according to any one of claims 3 to 5, wherein the circuitry, in operation, compares the received first identifier with a stored first identifier stored at the loT device.

7. The loT device according to claim 6, wherein the circuitry, in operation, in case the received first identifier matches the stored first identifier stored at the loT device, replaces the stored first identifier stored at the loT device with identifier provided by the reader.

8. The loT device according to any one of claims 6 to 7 wherein the circuitry, in operation, compares the identifier provided by the reader with the stored first identifier, and in case the circuitry, in operation, determines that the identifier provided by the reader matches the stored first identifier stored at the loT device, the transceiver, in operation, transmits, the second message to the reader.

9. The loT device according to any one of claims 1 to 8, wherein the second message comprises at least one of
the identifier provided by the reader;
an identifier generated by the loT device;
upper layer data;
inventory data of the loT device;
user data of the loT device.

10. The loT device according to any one of claims 1 to 9 wherein the transceiver, in operation, receives the first message, wherein the first message is received during an access procedure of the loT device with the reader;
optionally wherein the second message is part of a subsequent procedure subsequent to the access procedure.

11. A method comprising the following steps performed by an Internet of Things, loT, device:
assigning an identifier provided by a reader, wherein the identifier provided by the reader is comprised in a first message; and
transmitting, in response to assigning the identifier provided by the reader, a second message to the reader.

12. A reader comprising,
a transceiver, which in operation, transmits a message to an Internet of Things, IoT device, wherein the message comprises an identifier provided by the reader;
a circuitry, which in operation, determines based on whether or not receiving a response to the message whether the identifier provided by the reader is assigned to the loT device.

13. The reader according to claim 12, wherein the message is a retransmission of a previous message, the previous message comprises the identifier provided by the reader;
optionally wherein the previous message additionally comprises a first identifier.
optionally wherein the message that is the retransmission of the previous message does not comprise a first identifier.

14. The reader according to any one of claims 12 to 13, wherein circuitry, in operation, determines in response to receiving the response to the message that the identifier provided by the reader is assigned to the loT device.

15. The reader according to any one of claims 12 to 13, wherein circuitry, in operation, determines in response to not receiving the response to send an initial paging message to the loT device.
